# EUROPÄISCHE PATENTANMELDUNG

(11) **EP 1 152 178 A2**
(43) Veröffentlichungstag der Anmeldung: **07.11.2001**
(21) Anmeldenummer: 01102269.6
(22) Anmeldetag: 31.01.2001
(51) Int. Cl.: F16K 15/04

(54) **Einsatzteil für ein Ventil**

(30) Priorität: 05.05.2000 DE 10021921
(71) Anmelder: Weber-Hydraulik GmbH, 74363 Güglingen (DE)
(72) Erfinder: Schulz, Ulrich, 74336 Brackenheim-Stockheim (DE)
(74) Vertreter: Säger, Manfred, Dipl.-Ing.

(57) **Zusammenfassung**

Es ist ein bezüglich seiner Achse (24) rotationssymmetrisches Einsatzteil (20) mit einer Rückseite (21) und einer inneren Vorderseite (22) zum Einsetzen mit dieser in eine einen bestimmten Innendurchmesser (12) aufweisende Ventilbohrung (11) vorgesehen, die im eingesetzten Zustand eine mit der Achse (24) des Einsatzteils (20) zusammenfallende Bohrungsachse (13) in einem Ventilkörper (14) eines Ventils vorzugsweise eines Druckbegrenzungsventils aufweist, das dadurch gekennzeichnet ist, daß das Einsatzteil im Bereich seiner Vorderseite einen konzentrisch zu der Achse umlaufenden ersten Wulst aufweist, daß dieser mit einem Bereich mit dem Innendurchmesser der Ventilbohrung entsprechenden maximalem Außendurchmesser versehen ist, daß sich an den ersten Wulst in Richtung auf die Rückseite eine konzentrisch zu der Achse umlaufende Einschnürung anschließt und daß auf diese in Richtung auf die Rückseite des Einsatzteils ein konzentrisch zu der Achse umlaufender zweiter Wulst folgt, dessen Bereich mit maximalem Durchmesser größer als der maximale Außendurchmesser des ersten Wulstes ist.

## Beschreibung

Die Erfindung betrifft ein Einsatzteil gemäß dem Oberbegriff des Hauptanspruchs.

Solche Einsatzteile sind an sich bekannt. Insbesondere bei Verwendung in Ventilbohrungen eines Ventilkörpers zum Beispiel von einem Druckbegrenzungsventil mit kleinem Innendurchmesser des Schraubengewindes ist das Einsetzen und Einstellen des mit einem Außengewinde versehenen Einsatzteils mittels eines geeigneten Werkzeuges aufwendig und ungenau. Das Einstellen zur Einstellung des genauen Schaltdrucks ist daher nicht oder nur ungenügend möglich.

Der Erfindung liegt deshalb die Aufgabe zugrunde, ein gattungsgemäßes Einsatzteil gemäß dem Oberbegriff des Hauptanspruchs so weiterzubilden, daß damit eine einfache und genaue Einstellung des Druckes, bei dem das Druckbegrenzungsventil in Funktion gesetzt wird, möglich ist.

Diese Aufgabe wird bei einem gattungsgemäßen Einsatzteil gemäß dem Oberbegriff des Hauptanspruchs erfindungsgemäß durch dessen kennzeichnende Merkmale gelöst.

Mit der erfindungsgemäßen Ausbildung des Einsatzteils kann dieses in einer einfachen Bohrung im Gegensatz zur Gewindebohrung beim Stand der Technik Einsatz finden. An seiner Vorderseite weist das Einsatzteil hierzu eine zum Zwecke der Führung in der Ventilbohrung mit vorgegebenem Innendurchmesser einen konzentrisch zu der Achse umlaufenden ersten Wulst mit einem dem Innendurchmesser der Ventilbohrung entsprechenden maximalen Außendurchmesser auf. Mit dem zweiten Wulst, dessen Bereich mit maximalem Durchmesser größer als der maximale Außendurchmesser des ersten Wulstes ausgebildet ist, wird ein Verklemmen und Verpressen des Einsatzteils insgesamt bewirkt. Im Gegensatz zum Stand der Technik muß daher das Einsatzteil nur mittels eines Werkzeuges in die Ventilbohrung um entweder ein empirisch ermitteltes Maß, oder aber in mehreren Schritten eingedrückt werden, wobei nach jedem Schritt eine Messung der Druckeinstellung möglich sein kann.

Durch diese erfindungsgemäße Ausbildung des Einsatzteiles ist eine besonders einfache Montage durch Eindrücken in die Ventilbohrung möglich. Allfällig hierbei entstehende Späne werden zwischen dem ersten und dem zweiten Wulst in der Einschnürung aufgenommen und festgelegt, so daß sie nicht im Bereich des Ventils herumvagabundieren können.

Zweckmäßigerweise sind die Materialpaarung sowie der zweite maximale Außendurchmesser auf den Innendurchmesser der Ventilbohrung so abgestimmt, daß sich der Innendurchmesser der Ventilbohrung hinter dem zweiten Wulst nach dessen Hineindrücken um ein bestimmtes Maß elastisch rückverformt. Aufgrund der erfolgten plastischen Verformung durch den größeren maximalen Durchmesser erfolgt die elastische Rückverformung nicht mehr bis zu dem Innendurchmesser der Ventilbohrung. Infolgedessen ist der zweite Wulst rückseitig durch die elastische Rückverformung der Innenwandung der Ventilbohrung abgestützt, so daß er hinreichend fest und zuverlässig in der Ventilbohrung festgelegt ist.

Zweckmäßige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: ein Druckbegrenzungsventil, im schematischen Querschnitt und
- Figur 2: eine Einzelheit II gemäß Figur 1, im größeren Maßstab.

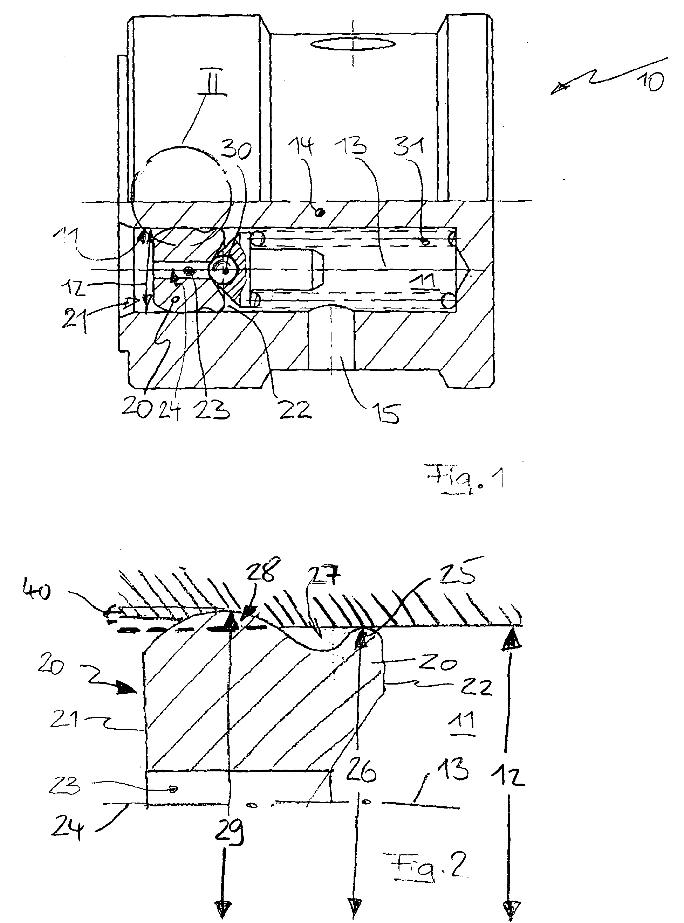

Das in Figur 1 insgesamt mit 10 bezeichnete Druckbegrenzungsventil weist eine Ventilbohrung 11 mit einem Innendurchmesser 12 mit einer Bohrungsachse 13 in einem Ventilkörper 14 auf, in welche Ventilbohrung ein insgesamt mit 20 bezeichnetes rotationssymmetrisch ausgebildetes Einsatzteil eingesetzt ist, welches mit einer Rückseite 21 und einer Vorderseite 22 versehen ist. Das Einsatzteil ist ferner mit einer von der Rückseite 21 zur Vorderseite 22 verlaufenden Durchgangsbohrung 23 versehen, auf deren Sitz im Bereich der Vorderseite 22 ein Dichtkörper, beispielsweise eine Kugel 30 aufliegt. Diese wird mittels der Kraft einer Feder 31 in Richtung auf den Sitz gedrückt. Je weiter das Einsatzteil 20 in Richtung der Ventilbohrung 11 hin eingepreßt wird, umso stärker ist die Gegenkraft der Feder 31 und infolgedessen wird der daraus resultierende Druck des Druckbegrenzungsventils immer höher. Erst wenn der in der Durchgangsbohrung 23 anliegende Druck einer Hydraulikflüssigkeit den eingestellten Druck überschreitet, wird der Dichtkörper 30 von ihrem Sitz abgehoben und die Flüssigkeit strömt in den restlichen Raum der Ventilbohrung 11 und kann über die seitliche Bohrung 15 abgeführt werden.

Das Einsatzteil ist in Figur 2 als Einzelheit II mit seiner mit der Bohrungsachse 13 der Ventilbohrung 11 zusammenfallenden Achse 24 näher dargestellt.

Das Einsatzteil 20 weist im Bereich seiner Vorderseite 22 einen konzentrisch zu der Achse 24 umlaufenden ersten Wulst 25 auf. Dieser ist mit einem dem Innendurchmesser 12 der Ventilbohrung entsprechenden Bereich mit maximalem Außendurchmesser 26 versehen. An diesen Wulst 25 schließt sich in Richtung auf die Rückseite 21 eine ebenfalls konzentrisch zu der Achse 24 verlaufende Einschnürung 27 an.

Auf diese Einschnürung folgt in Richtung auf die Rückseite 21 des Einsatzteils 20 ein zweiter Wulst 28, der ebenfalls konzentrisch zu der Achse 24 verläuft und dessen Bereich mit maximalem Durchmesser 29 größer als der maximale Außendurchmesser 26 des ersten Wulstes 25 bzw. größer als der Innendurchmesser 12 der Ventilbohrung 11 bemessen ist.

Bei Hineindrücken des Einsatzteils 20 in den Ventilbohrung 11 wird der erste Wulst 25 als Führung verwendet. Der zweite Wulst 28 weitet den Innendurchmesser 12 der Ventilbohrung 11 auf, so daß dieser hinter dem zweiten Wulst 28 um das Maß 40 etwas infolge der elastischen Rückverformung zurückspringt. Allerdings wird wegen der beim Eindrücken erfolgten teilweisen plastischen Verformung dieses Maß nicht so groß bemessen sein, daß es bis in den Bereich des Innendurchmessers 12 der Ventilbohrung 11 zurückspringt. Das solchermaßen in diese Ventilbohrung 11 eingedrückte Einsatzteil 10 ist in der gezeigten Lage infolgedessen hinreichend zuverlässig gegen herausdrückende Kräfte festgelegt.

## Patentansprüche

1. Bezüglich seiner Achse (24) rotationssymmetrisches Einsatzteil (20) mit einer Rückseite (21) und einer inneren Vorderseite (22) zum Einsetzen mit dieser in eine einen bestimmten Innendurchmesser (12) aufweisende Ventilbohrung (11), die im eingesetzten Zustand eine mit der Achse (24) des Einsatzteils (20) zusammenfallende Bohrungsachse (13) in einem Ventilkörper (14) eines Ventils (10) vorzugsweise eines Druckbegrenzungsventils aufweist, **dadurch gekennzeichnet, daß** das Einsatzteil (20) im Bereich seiner Vorderseite (22) einen konzentrisch zu der Achse (24) umlaufenden ersten Wulst (25) aufweist, daß dieser mit einem Bereich mit dem Innendurchmesser (12) der Ventilbohrung (11) entsprechenden maximalem Außendurchmesser (26) versehen ist, daß sich an den ersten Wulst (25) in Richtung auf die Rückseite (21) eine konzentrisch zu der Achse (24) umlaufende Einschnürung (27) anschließt und daß auf diese in Richtung auf die Rückseite (21) des Einsatzteils (20) ein konzentrisch zu der Achse (24) umlaufender zweiter Wulst (28) folgt, dessen Bereich mit maximalem Durchmesser (29) größer als der maximale Außendurchmesser (26) des ersten Wulstes (25) ist.

2. Einsatzteil nach Anspruch 1, **dadurch gekennzeichnet, daß** es eine von der Vorderseite (22) zur Rückseite (21) reichende Durchgangsbohrung (23) aufweist.

3. Einsatzteil nach Anspruch 2, **dadurch gekennzeichnet, daß** die Durchgangsbohrung (23) konzentrisch zu der Achse (24) ausgerichtet ist.
